# EUROPÄISCHE PATENTSCHRIFT

(11) **EP 1 321 698 B1**
(45) Veröffentlichungstag und Bekanntmachung des Hinweises auf die Patenterteilung: **02.08.2006**
(21) Anmeldenummer: 02027808.1
(22) Anmeldetag: 12.12.2002
(51) Int. Cl.: F16K 27/00, F16K 31/06, F15B 13/00

(54) **Einrichtung zum Zusammenschalten mehrerer hydraulischer oder pneumatischer Komponenten, insbesondere mehrerer Elektromagnetventile**
Device to interconnect more hydraulic or pneumatic components in particular electromagnetic valves
Dipositif pour connecter plusieurs composants hydrauliques ou pneumatiques, en particulier soupapes électromagnétiques

(30) Priorität: 22.12.2001 DE 10163785
(43) Veröffentlichungstag der Anmeldung: 25.06.2003
(73) Patentinhaber: A. und K. Müller GmbH & Co. KG, 40595 Düsseldorf (DE)
(72) Erfinder: Bodis, György, 40764 Langenfeld (DE); Kübler, Wolfgang, 42799 Leichlingen (DE)
(74) Vertreter: Feder, Wolf-Dietrich

(56) Entgegenhaltungen:
- EP-A- 0 715 112
- EP-A- 0 982 520
- EP-A- 1 069 356
- US-A- 4 782 852
- US-A1- 2001 027 817

## Beschreibung

Die Erfindung betrifft eine Einrichtung zum Zusammenschalten mehrerer hydraulischer oder pneumatischer Komponenten, insbesondere mehrerer Elektromagnetventile in Serien- und/oder Parallelschaltung mit den Merkmalen aus dem Oberbegriff des Patentanspruchs 1.

Eine derartige Einrichtung ist beispielsweise in EP 0 982 520 A2 sowie in der in letzterem Dokument zitierten EP 0 715 112 A2 beschrieben.

Der Erfindung liegt die Aufgabe zugrunde, eine Einrichtung der oben angegebenen Art so auszugestalten, daß ihre Herstellung insbesondere bei der Formung aus Kunststoffmaterial erheblich vereinfacht wird. Insbesondere sollte erreicht werden, daß eine leichte Montage der Verriegelungselemente möglich ist, und zwar derart, daß die Verriegelungselemente möglichst nicht in Berühung mit dem die Einrichtung durchströmenden Medium kommen.

Die Lösung dieser Aufgabe erfolgt erfindungsgemäß mit den Merkmalen aus dem kennzeichnenden Teil des Patentanspruchs 1. Vorteilhafte Weiterbildungen der Erfindung sind in den abhängigen Ansprüchen beschrieben.

Der Grundgedanke der Erfindung besteht darin, das Verteilerstück zweiteilig aufzubauen mit einem quaderförmigen Innenteil, das von einem Außenteil umgeben und insbesondere in dieses Außenteil einsteckbar ist. Die Ausbildung ist derart, daß die steckerartigen Verbindungsstücke zur Verbindung der Verteilerstücke untereinander durch das Außenteil hindurch in das Innenteil eingesteckt werden, so daß das Außenteil mit dem Medium nicht in Berührung kommt. Die Verriegelungselemente können dann im Außenteil angeordnet werden, insbesondere in Führungen oder Taschen des Außenteils eingesteckt werden.

Der zweiteilige Aufbau des Verteilerstücks bringt den Vorteil, daß bei einer Herstellung aus Kunststoffmaterial für die beiden Teile getrennte Formen vorgesehen werden können und die Formen zur Herstellung der beiden Teile sehr viel einfacher ausgestaltet sind und damit leichter hergestellt werden können. Weiterhin bietet die zweiteilige Ausführung die Möglichkeit, die beiden Teile aus unterschiedlichen Materialien herzustellen. Das Innenteil des Verteilerstücks kann als Ventil, insbesondere Elektromagnetventil, ausgebildet sein. In diesem Falle ist es vorteilhaft, wenn das Innenteil, welches in das Außenteil einsteckbar ist, an der beim Einstecken vom Außenteil abgewandten Seite eine Betätigungseinrichtung für das Ventil, insbesondere ein Magnetsystem für ein Elektromagnetventil, aufweist.

Das Verteilerstück kann aber auch so ausgebildet sein, daß es lediglich mit geraden oder gekrümmten Durchtrittskanälen oder Abzweigungen versehen ist und zum Zusammenschalten von Ventilen oder anderen Vorrichtungen dient.

Im folgenden wird anhand der beigefügten Zeichnungen ein Ausführungsbeispiel für eine Einrichtung nach der Erfindung näher erläutert.

In den Zeichnungen zeigen:
Fig. 1 in Seitenansicht ein zusammengesetzes Verteilerstück einer Einrichtung zum Zusammenschalten mehrerer hydraulischer oder pneumatischer Komponenten mit eingesteckten röhrförmigen Verbindungsstücken;
Fig. 2 einen Vertikalschnitt durch das Verteilerstück nach Fig. 1;
Fig. 3 in einer explodierten Darstellung analog Fig. 2 das Verteilerstück mit herausgezogenen rohrförmigen Verbindungstücken;
Fig. 4 in einer isometrischen explodierten Darstellung das Verteilerstück mit aus dem Außenteil herausgezogenem Innenteil;
Fig. 5 in einer isometrischen explodierten Darstellung das zusammengesetzte Verteilerstück mit herausgezogenen Verriegelungselementen;
Fig. 6 in einer Darstellung analog Fig. 5 das zusammengesetzte Verteilerstück mit herausgezogenen Verriegelungselementen und herausgezogenen rohrförmigen Verbindungstücken.

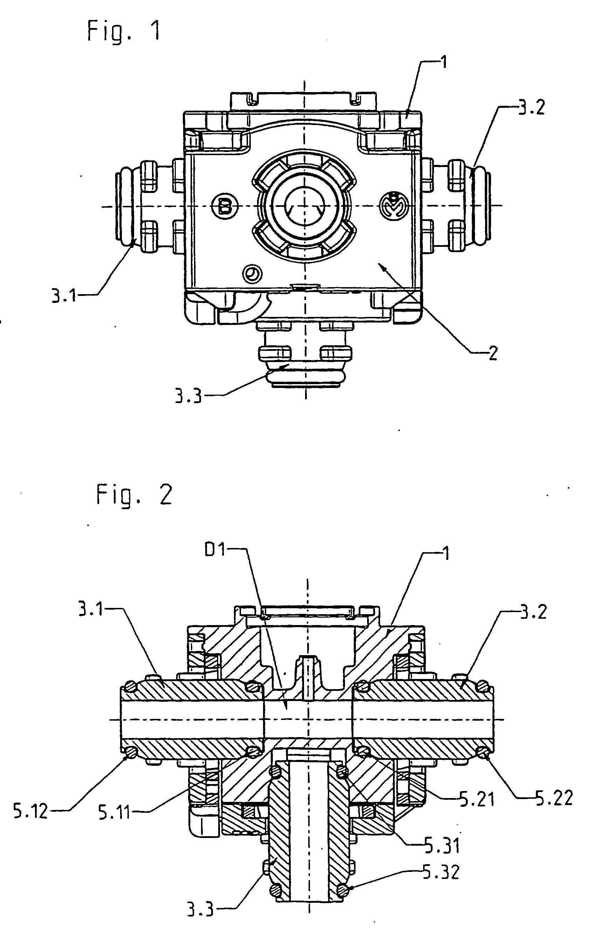

Die Fig. 1 bis 6 zeigen ein Verteilerstück sowie einige rohrförmige Verbindungstücke einer im übrigen nicht dargestellten Einrichtung zum Zusammenschalten mehrerer hydraulischer oder pneumatischer Komponenten. Das dargestellte Verteilerstück ist als Abzweigelement ausgebildet, an das in nicht eigens dargestellter Weise beispielsweise mehrere Elektromagnetventile angeschlossen werden können.

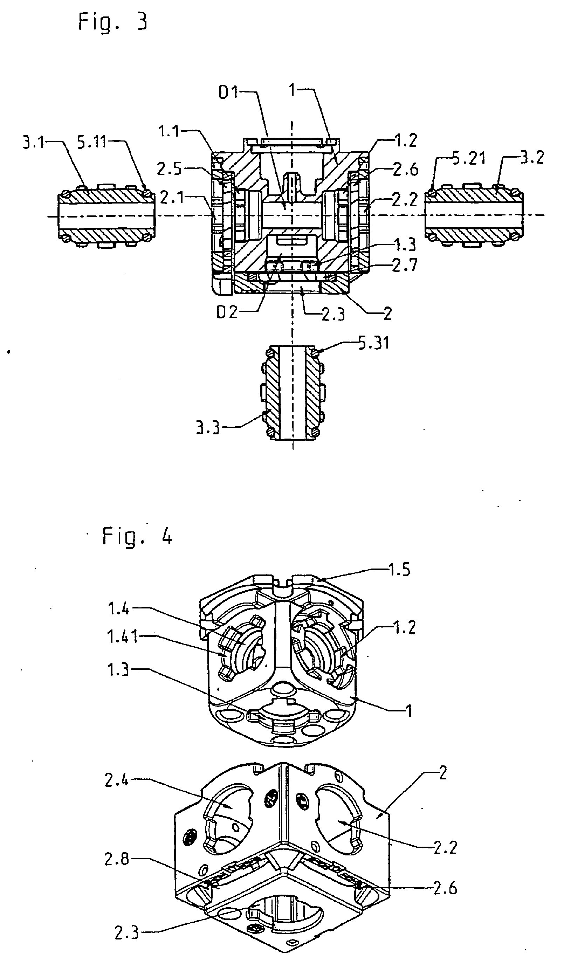

Das Verteilerstück ist zweiteilig aufgebaut, es besitzt ein Innenteil 1, das, wie Fig. 4 zeigt, in ein Außenteil 2 eingesteckt werden kann. Sowohl das Außenteil 2 als auch das Innenteil 1 sind in ihren äußeren Formen im wesentlichen quaderförmig aufgebaut. Das Außenteil 2 ist an der in den Fig. 1 bis 4 nach oben weisenden Seite offen, so daß das Innenteil 1 eingesteckt werden kann. Das Innenteil 1 besitzt Durchtrittskanäle D1 und D2 sowie einen dritten, in den Zeichnungen nicht sichtbaren Durchtrittskanal. An den Außenflächen des Innenteils 1 sind innere Anschlußöffnungen angeordnet, wobei die Anschlußöffnungen 1.1 und 1.2 durch den Durchtrittskanal D1 verbunden sind, während die Anschlußöffnung 1.3 an den Durchtrittskanal D2 und die Anschlußöffnung 1.4 an den nicht dargestellten Durchtrittskanal anschließt. Das Außenteil 2, das einen rechteckigen Außenquerschnitt und einen an das Innenteil 1 angepaßten Innenquerschnitt besitzt, trägt in seinen Außenwänden koaxial zu den inneren Anschlußöffnungen des Innenteils 1 angeordnete äußere Anschlußöffnungen 2.1, 2.2, 2.3 und 2.4. Weiterhin sind in den Seitenwänden und der Bodenwand des Außenteils 2 taschenartige, mit Führungen versehene Einstecköffnungen 2.5, 2.6, 2.7, 2.8 angeordnet, in welche Verriegelungselemente 4.1, 4.2, 4.3, 4.4 einsteckbar sind, die weiter unten näher beschrieben werden.

Zur Verbindung des aus dem Innenteil 1 und dem Außenteil 2 bestehenden, zusammengesetzten Verteilerstücks mit einem anderen Verteilerstück oder einem Ventil oder dergleichen dienen rohrförmige, steckerartige Verbindungsstücke 3.1, 3.2, 3.3, 3.4, welche durch die äußeren Anschlußöffnungen im Außenteil 2 hindurch in die inneren Anschlußöffnungen des Innenteils 1 eingesteckt werden können, wie dies in den Fig. 2 und 3 dargestellt ist. Die steckerartigen Verbindungsstücke sind an ihren Enden mit Dichtungsringen wie beispielsweise 5.11, 5.21 und 5.31 versehen, durch welche eine abgedichtete Verbindung zwischen dem steckerartigen Verbindungsstück und dem jeweiligen Durchtrittskanal im Innenteil 1 erreicht wird.

Um ein Herausfallen oder Herausgleiten der Verbindungsstücke aus dem Verteilerstück zu verhindern, werden diese nach dem Einstecken durch Verriegelungselemente verriegelt.

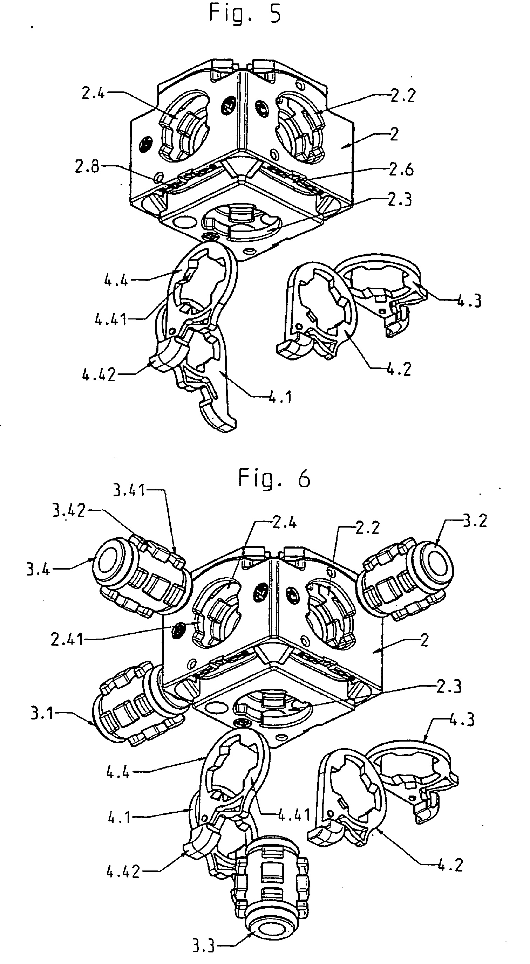

Im dargestellten Ausführungsbeispiel besitzt jedes der in das Außenteil 2 einsteckbaren Verriegelungselemente einen im eingesteckten Zustand um die Mittelachse der Anschlußöffnung drehbaren Verriegelungsring. So besitzt beispielsweise das in Fig. 6 dargestellte Verriegelungselement 4.4 einen Verriegelungsring 4.41, der sich radial nach innen erstreckende Verriegelungselemente trägt und über einen nach außen geführten Betätigungshebel 4.42 um einen vorgegebenen Drehwinkel aus einer Montagestellung in eine Verriegelungsstellung verdrehbar ist. Die steckerartigen Verbindungsstücke besitzen als Anschlagelemente jeweils mehrere sich radial nach außen erstreckende Verriegelungsnocken, die in vorgegebenen Winkelabständen mit Zwischenräumen angeordnet sind. So besitzt beispielsweise das in Fig. 6 dargestellte Verbindungstück 3.4 an jedem seiner Enden vier Verriegelungsnocken 3.41. Die Weite der Zwischenräume zwischen den Verriegelungsnocken ist mindestens so groß wie die Breite der Verriegelungssegmente am Verriegelungsring 4.41 in Umfangsrichtung, und die Weite der Zwischenräume zwischen den Verriegelungssegmenten ist mindestens so groß wie die Breite der Verriegelungsnocken 3.41 in Umfangsrichtung. Auf diese Weise wird erreicht, daß beim Einstecken des steckerartigen Verbindungsstücks 3.4 in die buchsenartige Anschlußöffnung 2.4 in der Montagestellung des Verriegelungsrings 4.41 die Verriegelungssegmente zwischen den Verriegelungsnocken 3.41 hindurchtreten und die Einstecktiefe so festgelegt ist, daß die Verriegelungsnocken im voll eingesteckten Zustand in Einsteckrichtung gesehen unmittelbar hinter der Bahn der Verriegelungssegmente liegen. Bei einer Verdrehung des Verriegelungsrings 4.41 aus der Montagestellung in die Verriegelungsstellung werden die Verriegelungsnocken 3.41 von den Verriegelungssegmenten des Verriegelungsrings 4.41 hintergriffen, so daß ein Herausfallen oder Herausziehen des Verbindungsstücks 3.4 aus der Anschlußöffnung 2.4 nicht mehr möglich ist. Nach dem Zurückschwenken des Verriegelungsrings 4.41 aus der Verriegelungsstellung in die Montagestellung kann das Verbindungsstück 3.4 wieder herausgezogen werden. Außer den Verriegelungsnocken 3.41 trägt das Verbindungsstück 3.4 noch Führungsnocken 3.42, die beim Einstecken zwischen am Innenumfang der Anschlußöffnung 2.4 angeordnete Führungsrippen 2.41 eingreifen und zur axialen Führung des Verbindungsstücks dienen.

In analoger Weise sind die Verriegelungselemente und Verriegelungssegmente der anderen Verbindungsstücke 3.1, 3.2, 3.3 und der Verriegelungsringe 4.1, 4.2, 4-3 aufgebaut.

Um einen festen Sitz des Innenteils 1 im Außenteil 2 nach dem Einstecken zu erreichen, weist das Innenteil 1 an seiner beim Einstecken vom Außenteil 2 abgewandten Seite einen überstehenden, sich auf das Außenteil 2 aufsetzenden Kragen 1.5 auf.

## Patentansprüche

1. Einrichtung zum Zusammenschalten mehrerer hydraulischer oder pneumatischer Komponenten, insbesondere mehrerer Elektromagnetventile in Serien- und/oder Parallelschaltung mit mindestens einem quaderförmigen Verteilerstück, das mit mindestens einem Durchtrittskanal versehen ist, der in Anschlußöffnungen an der Außenseite des Verteilerstücks mündet, wobei die Anschlußöffnungen buchsenartig ausgebildet sind und zum Zusammenschalten jeweils zweier aneinander angrenzender Verteilerstücke nach Art eines Baukastensystems im wesentlichen rohrförmige Verbindungsstücke dienen, die an beiden Enden steckerartig ausgebildet sind und jedes Ende in eine buchsenartige Anschlußöffnung einsteckbar und dort mittels einer Verriegelungseinrichtung verriegelbar ist, wobei im Bereich der Anschlußöffnung im Verteilerstück angeordnete, bewegbare Verriegelungselemente am steckerartigen Verbindungsstück angeordnete Anschlagelemente hintergreifen, **dadurch gekennzeichnet, daß** das Verteilerstück ein im wesentlichen quaderförmiges Innenteil (1) aufweist, das den Durchtrittskanal bzw. die Durchtrittskanäle (D1, D2) enthält, und an dessen Außenflächen innere Anschlußöffnungen (1.1, 1.2, 1.3, 1.4) angeordnet sind und das Innenteil (1) mindestens an vier Seitenflächen von einem Außenteil (2) mit rechteckigem Querschnitt umgeben ist, das in seinen Außenwänden koaxial zu den inneren Anschlußöffnungen angeordnete äußere Anschlußöffnungen (2.1, 2.2, 2.3, 2.4) aufweist, wobei die Verriegelungselemente (4.1, 4.2, 4.3, 4.4) im Außenteil (2) angeordnet sind und die steckerartigen Verbindungsstücke (3.1, 3.2, 3.3, 3.4) durch die äußeren Anschlußöffnungen hindurch in die inneren Anschlußöffnungen einsteckbar sind.

2. Einrichtung nach Anspruch 1, **dadurch gekennzeichnet, daß** das Außenteil (2) mindestens an einer Seite eine Öffnung aufweist, in welche das Innenteil (1) einsteckbar ist.

3. Einrichtung nach Anspruch 1 oder 2, **dadurch gekennzeichnet, daß** die Verriegelungselemente (4.1, 4.2, 4.3, 4.4) in Führungen im Außenteil (2) einsteckbar sind.

4. Einrichtung nach Anspruch 2 oder 3, **dadurch gekennzeichnet, daß** das Innenteil (1) an seiner beim Einstecken vom Außenteil (2) abgewandten Seite einen überstehenden, sich auf das Außenteil (2) aufsetzenden Kragen (1.5) aufweist.

5. Einrichtung nach einem der Ansprüche 1 bis 4, **dadurch gekennzeichnet, daß** jedes Verriegelungselement (4.4) einen um die Mittelachse der Anschlußöffnung (2.4) drehbaren Verriegelungsring (4.41)aufweist, der sich radial nach innen erstreckende Verriegelungssegmente trägt und über einen nach außen geführten Betätigungshebel (4.42) um einen vorgegebenen Drehwinkel aus einer Montagestellung in eine Verriegelungsstellung verdrehbar ist, und am steckerartigen Verbindungsstück (3.4) als Anschlagelemente jeweils an mindestens einem Ende mehrere, sich radial nach außen erstreckende Verriegelungsnocken (3.41) in vorgegebenen Winkelabständen mit Zwischenräumen angeordnet sind, wobei die Weite dieser Zwischenräume mindestens so groß ist wie die Breite der Verriegelungssegmente in Umfangsrichtung und die Weite der Zwischenräume zwischen den Verriegelungssegmenten mindestens so groß ist wie die Breite der Verriegelungsnocken in Umfangsrichtung und die Anordnung derart ist, daß beim Einstecken eines steckerartigen Verbindungsstücks (3.4) in die buchsenartige Anschlußöffnung (2.4) in durch Führungsmittel festgelegten Winkelstellungen in Umfangsrichtung die Verriegefungssegmente zwischen den Verriegelungsnocken hindurchtreten und die Einstecktiefe so festgelegt ist, daß die Verriegelungsnocken (3.41) im voll eingesteckten Zustand in Einsteckrichtung gesehen unmittelbar hinter der Bahn der Verriegelungssegmente liegen und bei einer entsprechenden Verdrehung des Ver-riegelungsrings (4.41) aus der Montagestellung in die Verriegelungs-stellung von diesen hintergriffen werden.

6. Einrichtung nach einem der Ansprüche 1 bis 5, **dadurch gekennzeichnet, daß** das Innenteil des Verteilerstücks als Ventil, insbesondere Elektromagnetventil, ausgebildet ist.

7. Einrichtung nach Anspruch 2 und 6, **dadurch gekennzeichnet, daß** am Innenteil an der beim Einstecken vom Außenteil abgewandten Seite eine Betätigungseinrichtung für das Ventil, insbesondere ein Magnetsystem für ein Elektromagnetventil, angeordnet ist.

## Claims

1. Device for interconnecting a plurality of hydraulic or pneumatic components, in particular a plurality of electromagnetic valves, in series and/or parallel connection, said device having at least one right-parallelepiped distribution piece provided with at least one passage channel which opens into connection apertures on the exterior of the distribution piece, the connection apertures being realized in the form of bushes and substantially tubular connecting pieces serving to interconnect respectively two mutually adjacent distribution pieces in the manner of a modular system, said connecting pieces being realized in the form of plug connectors at both ends and each end being able to be inserted into a bush-type connection aperture and of being locked there by means of a locking device, movable locking elements disposed in the region of the connection aperture in the distribution piece engaging with stop elements disposed on the plug-connector type connecting piece, **characterized in that** the distribution piece has a substantially right-parallelepiped inner part (1) which comprises the passage channel or the passage channels (D1, D2) and on the outer faces of which are disposed inner connection apertures (1.1, 1.2, 1.3, 1.4), and the inner part (1) is surrounded at least on four side faces by an outer part (2) of rectangular cross-section which has in its outer walls outer connection apertures (2.1, 2.2, 2.3, 2.4) disposed coaxially relative to the inner connection apertures, the locking elements (4.1, 4.2, 4.3, 4.4) being disposed in the outer part (2) and the plug-connector type connecting pieces (3.1, 3.2, 3.3, 3.4) being able to be inserted into the inner connection apertures through the outer connection apertures.

2. Device according to claim 1, **characterized in that** the outer part (2) has, at last on one side, an aperture into which the inner part (1) can be inserted.

3. Device according to either of claims 1 or 2, **characterized in that** the locking elements (4.1, 4.2, 4.3, 4.4) can be inserted into guides in the outer part (2).

4. Device according to either of claims 2 or 3, **characterized in that**, on its side that faces away from the outer part (2) upon its insertion, the inner part (1) has a projecting collar (1.5) which bears on the outer part (2).

5. Device according to any one of claims 1 to 4, **characterized in that** each locking element (4.4) has a locking ring (4.41) which is rotatable about the central axis of the connection aperture (2.4), carries locking segments extending radially inwards and can be twisted by a predefined rotational angle, by means of an outwardly extending actuating lever (4.42), from an assembly position into a locking position, and a plurality of locking lobes (3.41), extending radially outwards, are respectively disposed as stop elements at at least one end, at predefined angular distances with interspaces on the plug-connector type connecting piece (3.4), the width of these interspaces being at least as great as the width of the locking segments in the circumferential direction and the width of the interspaces between the locking segments being at least as great as the width of the locking lobes in the circumferential direction, and the arrangement being such that, upon insertion of a plug-connector type connecting piece (3.4) into the bush-type connection aperture (2.4) in angular positions in the circumferential position defined by guide means, the locking segments go in between the locking lobes and the insertion depth is so defined that the locking lobes (3.41), in the fully inserted state, as viewed in the direction of insertion, are located immediately behind the web of the locking segments and, upon a corresponding twisting of the locking ring (4.41) from the assembly position into the locking position, are engaged by said locking segments.

6. Device according to any one of claims 1 to 5, **characterized in that** the inner part of the distribution piece is realized as a valve, in particular an electromagnetic valve.

7. Device according to claims 2 and 6, **characterized in that** an actuating device for the valve, in particular a magnet system for an electromagnetic valve, is disposed on the inner part, on the side facing away from the outer part upon its insertion.

## Revendications

1. Dispositif pour l'interconnexion de plusieurs composants hydrauliques ou pneumatiques, en particulier de plusieurs vannes électromagnétiques dans un montage en série et/ou parallèle avec au moins une pièce de distribution en forme de parallélépipède, qui est dotée d'au moins un canal de passage, laquelle débouche dans des ouvertures de branchement sur le côté extérieur de la pièce de distribution, les ouvertures de branchement étant réalisées en forme de douille et des pièces de liaison sensiblement en forme de tube servant à l'interconnexion de respectivement deux pièces de distribution contiguës entre elles à la façon d'un système modulaire, lesquelles pièces de liaison sont conçues en forme de fiche aux deux extrémités et chaque extrémité pouvant être emboîtée dans une ouverture de branchement de type douille et pouvant être verrouillée à cet endroit au moyen d'un dispositif de verrouillage, des éléments de verrouillage disposés dans la pièce de distribution et mobiles saisissant par l'arrière des éléments de butée disposés sur la pièce de liaison de type fiche dans la zone de l'ouverture de raccordement, **caractérisé en ce que** la pièce de distribution présente une partie intérieure (1) sensiblement en forme de parallélépipède qui contient le canal de passage ou les canaux de passage (D1, D2) et sur les surfaces extérieures de laquelle sont disposées des ouvertures de branchement (1.1, 1.2, 1.3, 1.4) intérieures et la partie inférieure (1) est entourée sur quatre faces latérales par une partie extérieure (2) avec une section rectangulaire, qui présente dans ses parois extérieures des ouvertures de branchement (2.1, .2.2, 2.3, 2.4) extérieures disposées sur le même axe que les ouvertures de branchement intérieures, les éléments de verrouillage (4.1, 4.2, 4.3, 4.4) étant disposés dans la partie extérieure (2) et les pièces de liaison (3.1, 3.2, 3.3, 3.4) de type fiche pouvant être emboîtées à travers les ouvertures de branchement extérieures dans les ouvertures de branchement intérieures.

2. Dispositif selon la revendication 1, **caractérisé en ce que** la partie extérieure (2) présente au moins sur un côté une ouverture dans laquelle la partie intérieure (1) peut être emboîtée.

3. Dispositif selon la revendication 1 ou 2, **caractérisé en ce que** les éléments de verrouillage (4.1, 4.2, 4.3, 4.4) peuvent être emboîtés dans des guides dans la partie extérieure (2).

4. Dispositif selon la revendication 2 ou 3, **caractérisé en ce que** la partie intérieure (1) présente sur son côté opposé à la partie extérieure (2) lors de l'emboîtement un col (1.5) saillant et se posant sur la partie extérieure (2).

5. Dispositif selon l'une quelconque des revendications 1 et 4, **caractérisé en ce que** chaque élément de verrouillage (4.4) présente une bague de verrouillage (4.41) pouvant tourner autour de l'axe médian de l'ouverture de branchement (2.4), qui porte des éléments de verrouillage s'étendant radialement vers l'intérieur et qui peut être tournée au moyen d'un levier d'actionnement (4.42) guidé vers l'extérieur d'un angle de rotation prédéfini à partir de sa position de montage dans une position de verrouillage, et plusieurs cames de verrouillage (3.4) s'étendant radialement vers l'extérieur sont disposées à des distances angulaires prédéfinies avec des espaces intermédiaires sur la pièce de liaison (3.41) de type fiche comme éléments de butée respectivement sur au moins une extrémité, la largeur de ces espaces intermédiaires étant au moins aussi grande que la largeur des éléments de verrouillage dans le sens périphérique et la largeur des espaces intermédiaires entre les éléments de verrouillage étant au moins aussi grande que la largeur des cames de verrouillage dans le sens périphérique et l'agencement étant tel que, lors de l'emboîtement d'une pièce de liaison (3.4) de type fiche dans l'ouverture de branchement (2.4) de type douille, les segments de verrouillage entre les cames de verrouillage passent dans des positions d'angle définies par des moyens de guidage dans le sens périphérique et la profondeur d'emboîtement étant définie de telle sorte que les cames de verrouillage (3.41) sont situées directement derrière la trajectoire des segments de verrouillage dans l'état complètement emboîté, dans le sens d'emboîtement et sont saisis à l'arrière par ces segments lors d'une rotation appropriée de la bague de verrouillage (4.41) à partir de la position de montage dans la position de verrouillage.

6. Dispositif selon l'une quelconque des revendications 1 à 5, **caractérisé en ce que** la partie intérieure de la pièce de distribution est conçue comme vanne, en particulier comme vanne électromagnétique.

7. Dispositif selon les revendications 2 et 6, **caractérisé en ce que** un dispositif d'actionnement pour la vanne, en particulier un système d'aimant pour une vanne électromagnétique, est disposé sur la partie intérieure sur le côté opposé lors de l'emboîtement de la partie extérieure.
